(19) Europäisches Patentamt / European Patent Office / Office européen des brevets

(11) **EP 3 859 275 B1**

(12) **EUROPEAN PATENT SPECIFICATION**

(45) Date of publication and mention of the grant of the patent:
**28.02.2024 Bulletin 2024/09**

(21) Application number: **19892723.8**

(22) Date of filing: **08.10.2019**

(51) International Patent Classification (IPC):
**G01C 21/20** (2006.01)    **B64C 13/18** (2006.01)
**B64C 13/20** (2006.01)    **B64C 39/02** (2023.01)
**B64D 47/08** (2006.01)    **G06N 3/02** (2006.01)
**B64D 45/00** (2006.01)    **G01C 11/06** (2006.01)

(52) Cooperative Patent Classification (CPC):
**G01C 21/20; G01C 23/00; G06N 3/045;**
**G06N 3/084; G06V 10/24; G06V 20/13;**
**G06V 20/64;** G01C 11/06; G06N 3/048

(86) International application number:
**PCT/JP2019/039630**

(87) International publication number:
**WO 2020/116018 (11.06.2020 Gazette 2020/24)**

(54) **NAVIGATION APPARATUS, NAVIGATION PARAMETER CALCULATION METHOD, AND PROGRAM**

NAVIGATIONSVORRICHTUNG, NAVIGATIONSPARAMETERBERECHNUNGSVERFAHREN UND PROGRAMM

APPAREIL DE NAVIGATION, PROCÉDÉ DE CALCUL DE PARAMÈTRE DE NAVIGATION, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2018 JP 2018227465**

(43) Date of publication of application:
**04.08.2021 Bulletin 2021/31**

(73) Proprietor: **Mitsubishi Electric Corporation**
**Tokyo 100-8310 (JP)**

(72) Inventors:
• **MAEHARA, Hideaki**
**Tokyo 100-8310 (JP)**
• **HINO, Momoyo**
**Tokyo 100-8310 (JP)**
• **SUZUKI, Ryoga**
**Tokyo 100-8310 (JP)**
• **TAIRA, Kenji**
**Tokyo 102-0073 (JP)**
• **KATO, Sumio**
**Tokyo 102-0073 (JP)**

(74) Representative: **Pfenning, Meinig & Partner mbB**
**Patent- und Rechtsanwälte**
**Theresienhöhe 11a**
**80339 München (DE)**

(56) References cited:
**JP-B2- S6 029 794    US-A1- 2017 168 488**

• **LI RUIHAO ET AL: "Indoor Relocalization in Challenging Environments With Dual-Stream Convolutional Neural Networks", IEEE TRANSACTIONS ON AUTOMATION SCIENCE AND ENGINEERING, vol. 15, no. 2, 1 April 2018 (2018-04-01), pages 651-662, XP055852463, US ISSN: 1545-5955, DOI: 10.1109/TASE.2017.2664920 Retrieved from the Internet: URL:https://ieeexplore.ieee.org/stampPDF/g etPDF.jsp?tp=&arnumber=7869254&ref=aHR0c HM 6Ly9pZWVleHBsb3JlLmllZWUub3JnL2RvY3VtZ W50L zc4NjkyNTQ=>**

- Müller M. S ET AL: "SQUEEZEPOSENET: IMAGE BASED POSE REGRESSION WITH SMALL CONVOLUTIONAL NEURAL NETWORKS FOR REAL TIME UAS NAVIGATION", ISPRS annals of the photogrammetry, remote sensing and spatial information sciences, 7 September 2017 (2017-09-07), pages 49-57, XP055852460, Gottingen DOI: 10.5194/isprs-annals-IV-2-W3-49-2017 Retrieved from the Internet: URL:https://pdfs.semanticscholar.org/cb9d/260e1d95d3c892a544cc88801e72bac4226e.pdf?_ga=2.156454584.200782012.1634619674-1180496057.1597992414 [retrieved on 2021-10-19]
- PORZI LORENZO ET AL: "Depth-aware convolutional neural networks for accurate 3D pose estimation in RGB-D images", 2017 IEEE/RSJ INTERNATIONAL CONFERENCE ON INTELLIGENT ROBOTS AND SYSTEMS (IROS), IEEE, 24 September 2017 (2017-09-24), pages 5777-5783, XP033266620, DOI: 10.1109/IROS.2017.8206469 [retrieved on 2017-12-13]
- HASHIOKA, YOSHITERU et al.: "Estimation of 6 degrees of freedom relative motion of camera using DNN", IPSJ SIG Technical Reports. Computer vision and image media (CVIM), vol. 2017-CVIM-206, no. 13, 2 March 2017 (2017-03-02), pages 1-8, XP009527318, ISSN: 2188-8701
- MERIDA-FLORIANO M ET AL: "Bioinspired vision-only UAV attitude rate estimation using machine learning", 2017 INTERNATIONAL CONFERENCE ON UNMANNED AIRCRAFT SYSTEMS (ICUAS), IEEE, 13 June 2017 (2017-06-13), pages 1476-1482, XP033131838, DOI: 10.1109/ICUAS.2017.7991430 [retrieved on 2017-07-25]
- Clark Ronald ET AL: "VINet: Visual-Inertial Odometry as a Sequence-to-Sequence Learning Problem", Proceedings of the AAAI Conference on Artificial Intelligence, vol. 31, no. 1, 2 April 2017 (2017-04-02), XP055954245, ISSN: 2159-5399, DOI: 10.1609/aaai.v31i1.11215 Retrieved from the Internet: URL:https://arxiv.org/pdf/1701.08376.pdf>

## Description

TECHNICAL FIELD

The present invention relates to a navigation apparatus, a navigation parameter calculation method, and a program for calculating navigation parameters of a mobile object.

BACKGROUND ART

For example, a navigation apparatus described in Patent Literature 1 calculates a location and a posture of a mobile object by using an image photographed by a camera mounted on the mobile object and distance data from a laser beam irradiation reference point to a distance measuring point detected by a laser distance measuring device mounted on the mobile object.

CITATION LIST

PATENT LITERATURE

Patent Literature 1: Japanese Patent No. 6029794
The following publication discloses an indoor relocalization system using a dual-stream convolutional neural network (CNN) with both color images and depth images as the network inputs: R Li, Q Liu, J Gui, D Gu, H Hu: Indoor relocalization in challenging environments with dual-stream convolutional neural networks; IEEE Transactions on Automation Science and Engineering 15 (2), 651-662, 1 April 2018.
MERIDA-FLORIANO M ET AL: "Bioinspired vision-only UAV attitude rate estimation using machine learning", 2017 INTERNATIONAL CONFERENCE ON UNMANNED AIRCRAFT SYSTEMS (ICUAS), IEEE, 13 June 2017 (2017-06-13), pages 1476-1482, discloses a bioinspired system for attitude rate estimation using visual sensors for aerial vehicles.

SUMMARY OF INVENTION

TECHNICAL PROBLEM

The navigation apparatus described in Patent Literature 1 needs to perform image matching based on image features for each image data indicating an image photographed by a camera, and to perform adjustment calculation of the location and posture of a mobile object using distance data. Since these processes have a high calculation load, there is a problem that a large amount of calculation resources are required when it is necessary to increase a time resolution of navigation parameters indicating the location and posture of the mobile object.
The present invention solves the above problems, and provides a navigation apparatus, a navigation parameter calculation method, and a program capable of suppressing an increase in calculation resources required for calculation of navigation parameters even if the time resolution of navigation parameters of a mobile object is increased.

SOLUTION TO PROBLEM

The invention is defined in the independent claims.
The navigation apparatus according to the present invention includes, amongst others, a data acquisition unit for acquiring data used for calculating first navigation parameters of a mobile object, a data storage processing unit for storing the data acquired by the data acquisition unit in a storage device, a data retrieval unit for retrieving the data stored in the storage device, and a parameter calculation unit for calculating second navigation parameters of the mobile object corresponding to the data retrieved by the data retrieval unit using a neural network that calculates the first navigation parameters of the mobile object with data used for calculating the first navigation parameters of the mobile object as an input.

ADVANTAGEOUS EFFECTS OF INVENTION

According to the present invention, navigation parameters corresponding to data used for the calculation of the navigation parameters of the mobile object is calculated by using a neural network that calculates navigation parameters of the mobile object with data used for calculating navigation parameters of the mobile object as an input. By using the neural network, it is possible to suppress the increase in the calculation resources required for the calculation of the navigation parameters even if the time resolution of the navigation parameters of the mobile object is increased.

BRIEF DESCRIPTION OF DRAWINGS

FIG. 1 is a block diagram showing a configuration example of a navigation apparatus according to a first embodiment.
FIG. 2 is a flowchart showing a navigation parameter calculation method according to the first embodiment.
FIG. 3 is a diagram showing an example of image data in the first embodiment.
FIG. 4 is an image showing another example of image data in the first embodiment.
FIG. 5 is an image showing an example of depth data in the first embodiment.
FIG. 6 is a diagram showing a configuration example of a neural network.
FIG. 7 is a block diagram showing a configuration of a modification of the navigation apparatus according to the first embodiment.

FIG. 8 is a block diagram showing a configuration of another modification of the navigation apparatus according to the first embodiment.

FIG. 9A is a block diagram showing a hardware configuration for implementing functions of the navigation apparatus according to the first embodiment.

FIG. 9B is a block diagram showing a hardware configuration for executing software that implements functions of the navigation apparatus according to the first embodiment.

FIG. 10 is a block diagram showing a configuration example of a navigation apparatus according to a second embodiment.

FIG. 11 is a flowchart showing a navigation parameter calculation method according to the second embodiment.

FIG. 12A is an image showing an example of ground image data in the second embodiment. FIG. 12B is an image showing an example of ground depth data in the second embodiment. FIG. 12C is an image showing an example of image data in the second embodiment. FIG. 12D is an image showing an example of ground image data in which the image data of FIG. 12C is superimposed on the ground image data of FIG. 12A.

FIG. 13 is a block diagram showing a configuration of a modification of the navigation apparatus according to the second embodiment.

DESCRIPTION OF EMBODIMENTS

In order to explain this invention in more detail, embodiments for carrying out the present invention will be described below by referring to the accompanying drawings.

First Embodiment.

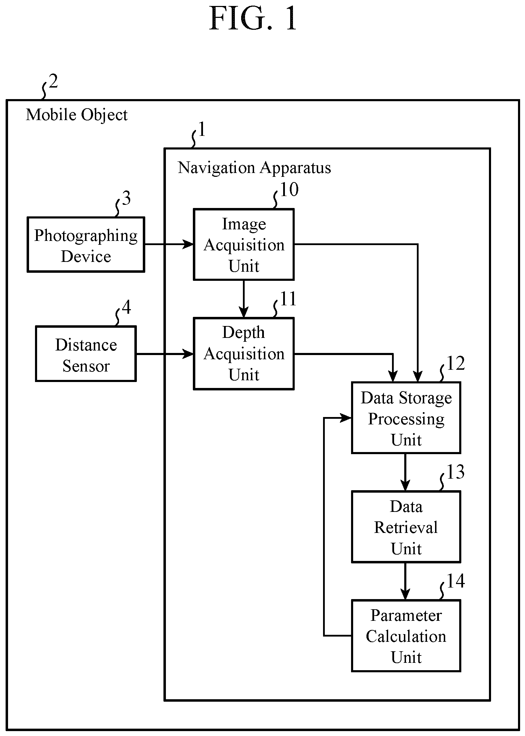

FIG. 1 is a block diagram showing a configuration example of a navigation apparatus 1 according to a first embodiment. The navigation apparatus 1 is, for example, a navigation apparatus included in a measuring system mounted on a mobile object 2. The measuring system includes a photographing device 3 and a distance sensor 4 in addition to the navigation apparatus 1, and measures topography using image data indicating an image photographed by the photographing device 3 and distance data to a distance measuring point measured by the distance sensor 4.

The navigation apparatus 1 calculates navigation parameters of the mobile object 2 in motion. The navigation parameter of the mobile object 2 is, for example, a parameter indicating a location, a posture of the mobile object 2, or an amount of change in the location or posture.

Note that, the navigation apparatus 1 may be an apparatus mounted on the mobile object 2 as shown in FIG. 1, or may be an apparatus provided at a place different from that of the mobile object 2. The navigation apparatus 1, in a case where it is an apparatus provided at a place different from that of the mobile object 2, estimates the location and posture of the mobile object 2 using information received from the mobile object 2 by wired or wireless communication. The mobile object 2 is a mobile object that can be photographed by the photographing device 3 and measured by the distance sensor 4 while moving, and is, for example, an aircraft, an artificial satellite, or an unmanned aerial vehicle (UAV). In the following, it will be described assuming that the mobile object 2 is an aircraft.

The photographing device 3 is a device that photographs an object to be measured from the mobile object 2, and is, for example, one or a plurality of aerial photography cameras mounted on an aircraft and photographing the ground surface from the sky. Optical information is captured by the photographing device 3. For example, the photographing device 3 can obtain optical information on the topography or structure on the ground surface as a subject. Further, the photographing device 3 photographs the ground surface at a predetermined cycle, for example, and generates optical information including the photographing date and time.

The distance sensor 4 is a sensor that detects the distance from the distance sensor 4 to the distance measuring point. The distance measuring point is a subject of optical information captured by the photographing device 3. For example, the distance sensor 4 is a laser scanner mounted on an aircraft. The laser scanner irradiates the subject side with the laser beam to receive the reflected light from the subject, and detects the distance from the laser beam irradiation reference point to the subject on the basis of information of the received reflected light.

The navigation apparatus 1 includes an image acquisition unit 10, a depth acquisition unit 11, a data storage processing unit 12, a data retrieval unit 13, and a parameter calculation unit 14. The image acquisition unit 10 is a data acquisition unit that acquires image data captured from the mobile object 2 as data used for calculating the navigation parameters of the mobile object 2. For example, the image acquisition unit 10 generates and acquires image data indicating an image of the subject from optical information each time the photographing device 3 obtains optical information including the photographing date and time, and sequentially outputs the acquired image data to the data storage processing unit 12. The image data may be a still image for each photographing date and time, or may be a moving image.

The depth acquisition unit 11 is a data acquisition unit that acquires depth data indicating information in the depth direction of the image data captured by the photographing device 3 as data used for calculating the navigation parameters of the mobile object 2. For example, the depth acquisition unit 11, when inputting the image data acquired by the image acquisition unit 10, generates depth data indicating the distance in the depth direction of the image data by using the distance data detected by the distance sensor 4 and the image data acquired by the image acquisition unit 10. Further, the depth data includes the photographing date and time of the image data. The depth acquisition unit 11 generates depth data each time the distance data is detected by the distance sensor 4, and sequentially outputs the generated depth data to the data storage processing unit 12.

The data storage processing unit 12 stores the time series of the image data sequentially acquired by the image acquisition unit 10 in a storage device (not shown) in FIG. 1, and stores the depth data acquired by the depth acquisition unit 11 in the storage device. The data storage processing unit 12 associates the image data with the photographing date and time of the image, and the depth data is associated with the photographing date and time of the image indicated by the corresponding image data and stored in the storage device.

The data retrieval unit 13 retrieves the time series of the image data and the depth data stored in the storage device by the data storage processing unit 12. For example, the data retrieval unit 13 retrieves the time series of the image data and the depth data from the data storage processing unit 12 on the basis of the time information. Here, when image data Ii indicating an image of a subject whose photographing date and time is time i is acquired, the data retrieval unit 13 retrieves the time series including the image data Ii and image data Ii-1 indicating an image of the same subject whose photographing date and time is time i-1 one hour before the time i, and depth data D corresponding to the image data Ii obtained at time i from the data storage processing unit 12.

The parameter calculation unit 14 calculates navigation parameters corresponding to the time series of the image data from the time series of the image data and the depth data retrieved by the data retrieval unit 13 by using a neural network. The neural network is learned to calculate navigation parameters of the mobile object 2 with the image data and depth data as inputs. Here, the navigation parameter of the mobile object 2 is, for example, a parameter indicating both or one of the amount of change in the location and the amount of change in the posture of the mobile object 2.

For example, the parameter calculation unit 14 calculates each amount of change in the location and posture of the mobile object 2 from the time i-1 to the time i based on the image data Ii, the image data Ii-1, and the depth data D retrieved by the data retrieval unit 13 by using the above neural network. The navigation parameters calculated by the parameter calculation unit 14 are stored in the data storage processing unit 12.

The operation will be described next.

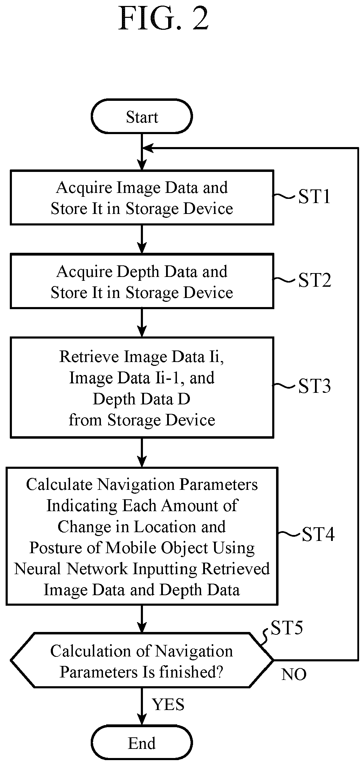

FIG. 2 is a flowchart showing a navigation parameter calculation method according to the first embodiment.

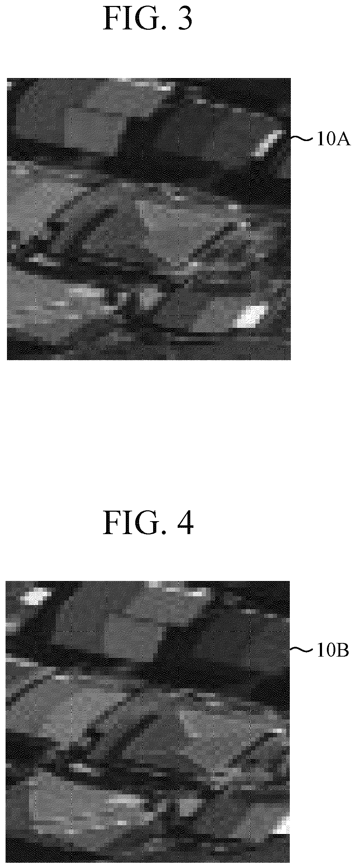

The image acquisition unit 10 acquires optical information from the photographing device 3, generates image data indicating an image of the subject from the acquired optical information, and outputs the image data to the data storage processing unit 12. The data storage processing unit 12 stores the image data input from the image acquisition unit 10 in the storage device (step ST1). At this time, the image acquisition unit 10 may output the image data to the depth acquisition unit 11. FIG. 3 is a diagram showing image data 10A, and FIG. 4 is an image showing image data 10B. For example, in the image data 10A and the image data 10B, rectangular structures are shown as shown in FIGS. 3 and 4, and these structures are the roofs of houses. In the following, it is assumed that the image data 10A is the image data Ii obtained at the time i, and the image data 10B is the image data Ii-1 obtained at the time i-1.

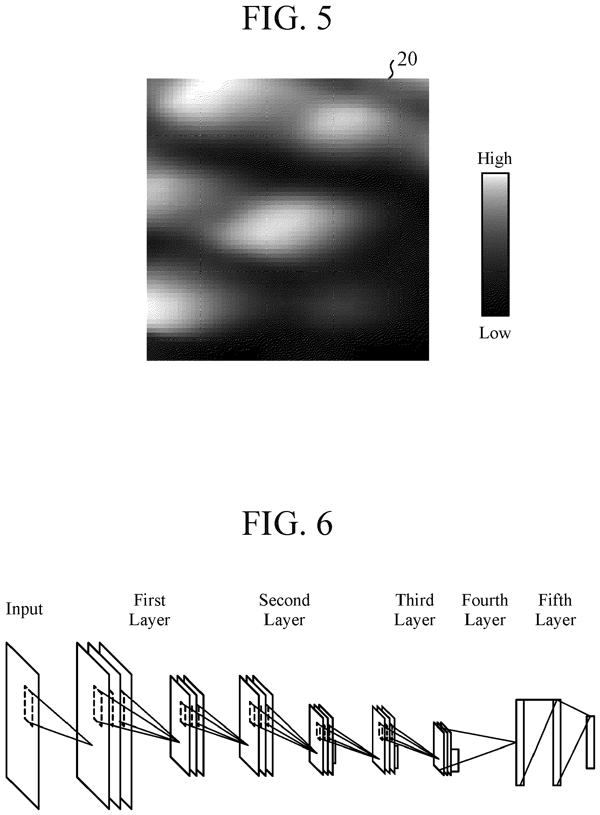

The depth acquisition unit 11 generates depth data using the distance data detected by the distance sensor 4 and the image data acquired by the image acquisition unit 10, and outputs the generated depth data to the data storage processing unit 12. The data storage processing unit 12 stores the depth data input from the depth acquisition unit 11 in the storage device (step ST2). FIG. 5 is an image showing depth data 20. The depth data 20 is depth data D corresponding to the image data Ii, and indicates the distance in the depth direction of the image data 10A. In the depth data 20, the height from the ground surface is expressed by shading. The darker the color, the closer (lower) it is to the ground surface, and the lighter the color, the farther (higher) it is from the ground surface. By referring to the image data 10A and the depth data 20, it can be seen that the part corresponding to the roof of the house is located higher than the other parts.

The processing of steps ST1 and ST2 corresponds to acquisition processing of data used for calculating the navigation parameters of the mobile object 2 by the data acquisition unit (image acquisition unit 10 and depth acquisition unit 11), and processing of storing data acquired by the data acquisition unit in the storage device by the data storage processing unit 12.

The data retrieval unit 13 retrieves the image data Ii, the image data Ii-1, and the depth data D stored in the storage device by the data storage processing unit 12 (step ST3). For example, when the latest image data Ii is obtained at time i, the data retrieval unit 13 retrieves the image data Ii, the image data Ii-1 obtained at time i-1, and the depth data D corresponding to the image data Ii from the storage device, and outputs these data to the parameter calculation unit 14.

The parameter calculation unit 14 calculates navigation parameters indicating each amount of change in the location and posture of the mobile object 2 from the image data and depth data retrieved by the data retrieval unit 13 by using the neural network (step ST4).

For example, the parameter calculation unit 14 inputs the image data Ii, image data Ii-1 and, depth data D to an input layer of the neural network, and acquires an amount of change in the location ($\Delta x$, $\Delta y$, $\Delta z$) and an

amount of change in the posture (Δω, Δφ, Δκ) of the mobile object 2 from the time i-1 to the time i calculated by the neural network and output from an output layer of the neural network.

Δω indicates the amount of change in the posture angle of the mobile object 2 in the rolling direction, Δφ indicates the amount of change in the posture angle of the mobile object 2 in the pitching direction, and Δκ indicates the amount of change in the posture angle of the mobile object 2 in the yawing direction. Note that, the parameter calculation unit 14 may calculate a navigation parameter indicating only the amount of change in the location of the mobile object 2, or may calculate a navigation parameter indicating only the amount of change in the posture of the mobile object 2. Further, the parameter calculation unit 14 may calculate the amount of change in the posture angle of at least one of the posture angles ω, φ and κ of the mobile object 2 as the navigation parameter of the mobile object 2.

After that, the parameter calculation unit 14 determines whether or not to finish the calculation of the navigation parameters (step ST5). For example, when the measuring system finishes the measurement of topography, the calculation of the navigation parameters of the mobile object 2 by the navigation apparatus 1 is also finished. When the calculation of the navigation parameters is finished (step ST5; YES), the series of processes shown in FIG. 2 is finished. On the other hand, if the calculation of the navigation parameters is not finished (step ST5; NO), the processing returns to the process of step ST1, and the above-mentioned series of processes is repeated.

Next, the neural network used for the calculation of navigation parameters will be described.

When the image data Ii, image data Ii-1, and depth data D are input by using teacher data, which is a set of the time series of the image data and the depth data and each amount of change in the location and posture of the mobile object 2 corresponding thereto, the neural network used by the parameter calculation unit 14 is learned to calculate and output both or one of the amount of change in the location (Δx, Δy, Δz) and the amount of change in the posture (Δω, Δφ, Δκ) of the mobile object 2 from time i-1 to time i. In the neural network, the adjustment calculation of the navigation parameters, which is repeatedly performed in order to improve the calculation accuracy of the navigation parameters of the mobile object in the conventional navigation apparatus, is unnecessary. The above adjustment calculation requires a large amount of calculation resources, but it is possible to suppress an increase in the calculation resources by using a neural network.

The neural network used for calculating the navigation parameters may be a neural network having an input layer capable of inputting (n + 1) pieces of image data from the image data Ii to the image data Ii-n. The parameter calculation unit 14 calculates navigation parameters indicating both or one of the amount of change in the location and the amount of change in the posture of the mobile object 2 corresponding to the time series of (n + 1) pieces of image data by using a neural network that calculates both or one of the amount of change in the location and the amount of change in the posture of the mobile object 2 with (n + 1) pieces of image data and depth data D corresponding to the time i as inputs.

For example, Reference 1 describes a technique for identifying an object by image recognition using a convolutional neural network (hereinafter referred to as CNN). The CNN is a neural network characterized in that a two-dimensional input signal, for example, a two-dimensional signal corresponding to image data, is filtered for each layer and passed to the next layer.

(Reference 1) Alex Krizhevsky, Ilya Sutskever, and Geoffrey E Hinton, "Imagenet classification with deep convolutional neural networks", In Advances in neural information processing systems, pages 1097-1105, 2012.

A neural network is a calculation model in which perceptrons that calculate the weighted sum of input signals and output by applying a nonlinear function called an activation function to the calculation result are arranged hierarchically. The perceptron is expressed as the following equation (1) when the input signal is X = (x1, x2, ⋯, xn), the weight is W = (w1, w2, ⋯, wn), the activation function is f (), and * is an element-wise product of a vector. In the CNN, the perceptron uses a two-dimensional signal as an input, calculates the weighted sum of the input two-dimensional signals, and passes it to the next layer. As the activation function, a sigmoid function or a ReLU function is used.

$$\text{out} = f(X*W) \qquad \cdots (1)$$

FIG. 6 is a diagram showing a configuration example of a neural network. As shown in FIG. 6, in the neural network, the perceptrons are arranged hierarchically, and the identification result is calculated by processing the signals input in each layer. The final layer corresponds to the output of a task to be identified, and if it is a regression task, a value obtained by applying the activation function to the signal is output as it is as a predicted value, and if it is a classification task, a value obtained by applying the softmax function to the signal in the final layer is output.

As shown in FIG. 6, the CNN is configured from a plurality of two-dimensional signal maps. It can be considered that each of the plurality of two-dimensional signals corresponds to the perceptron, and the result of calculating the weighted sum for the feature map of the previous layer and applying the activation function is output to the next layer. The process of calculating the weighted sum for the input signal and applying the activation function is called a convolution operation in CNN. A layer for performing a pooling process may be inserted in the CNN. The pooling process is a process of performing downsampling by performing an average value calculation or a maximum value calculation on a feature map.

The CNN shown in FIG. 6 has a convolution layer in the first layer, the second layer, and the third layer, and a fully connected layer is disposed in the fourth layer and the fifth layer. The fully connected layer combines the calculation results obtained in the intermediate layer to calculate the weighted sum, and then outputs it. In addition, the learning of the neural network is performed by backpropagation, and the classification error is minimized by using the stochastic gradient descent method. The backpropagation is a process of propagating the output error of the neural network from the final layer to the previous layer in order to update the weight.

Note that, the generation of depth data using the distance data detected by the laser scanner has been shown so far, but for example, the depth acquisition unit 11 may generate the depth data by using the image data acquired by the image acquisition unit 10 and the depth information detected by Kinect (registered trademark) or the distance information acquired by the distance camera.

Next, a modification of the navigation apparatus according to the first embodiment will be described.

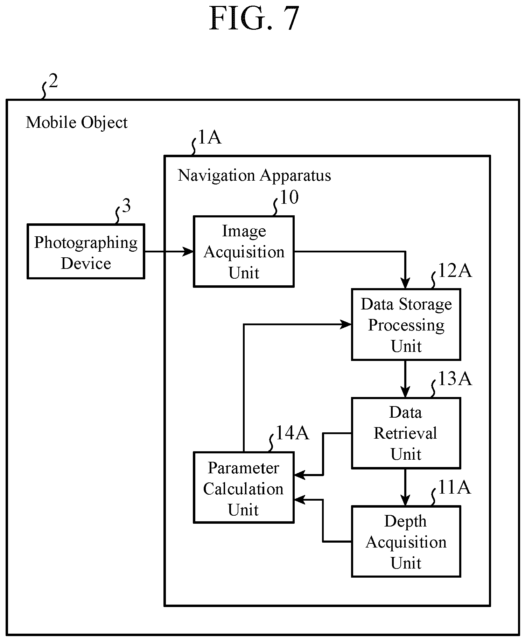

FIG. 7 is a block diagram showing the configuration of a navigation apparatus 1A, which is a modification of the navigation apparatus 1. In FIG. 7, the navigation apparatus 1A includes an image acquisition unit 10, a depth acquisition unit 11A, a data storage processing unit 12A, a data retrieval unit 13A, and a parameter calculation unit 14A.

The data storage processing unit 12A stores the image data acquired by the image acquisition unit 10 and the navigation parameters of the mobile object 2 calculated by the parameter calculation unit 14A in a storage device (not shown in FIG. 7). The data retrieval unit 13A retrieves time series of the image data stored in the storage device by the data storage processing unit 12A, and outputs the time series to the depth acquisition unit 11A and the parameter calculation unit 14A.

The depth acquisition unit 11A is a data acquisition unit for generating depth data using the time series of image data retrieved by the data retrieval unit 13A. For example, the depth acquisition unit 11A generates the depth data D at time i by performing image processing based on the principle of stereo photography on the image data Ii and the image data Ii-1 retrieved by the data retrieval unit 13A. For example, this image processing is processing of calculating the distance in the depth direction of the image data Ii by using the deviation between the location of the subject of the image data Ii and the location of the subject of the image data Ii-1 based on the movement of the mobile object 2. Note that, conventional image processing based on the principle of stereo photography may be used to generate the depth data D.

The parameter calculation unit 14A calculates navigation parameters corresponding to the time series of the image data from the time series of the image data retrieved by the data retrieval unit 13A and the depth data calculated by the depth acquisition unit 11A by using a neural network.

Since the depth acquisition unit 11A generates the depth data using the image data acquired by the image acquisition unit 10, the navigation apparatus 1A can calculate navigation parameters of the mobile object 2 even if the mobile object 2 does not have the distance sensor 4.

Note that, the neural network used for calculating the navigation parameters may be a neural network having an input layer capable of inputting (n + 1) pieces of image data from the image data Ii to the image data Ii-n. The parameter calculation unit 14A calculates navigation parameters indicating both or one of the amount of change in the location and the amount of change in the posture of the mobile object 2 by using a neural network that calculates both or one of the amount of change in the location and the amount of change in the posture of the mobile object 2 with (n + 1) pieces of image data and depth data as inputs.

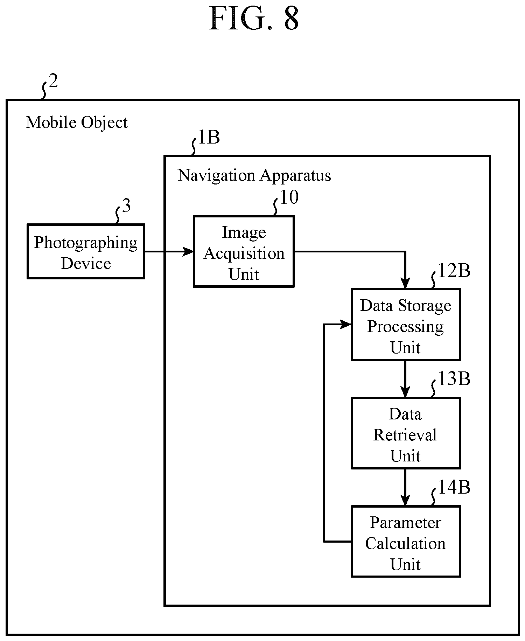

FIG. 8 is a block diagram showing a configuration of a navigation apparatus 1B, which is a modification of the navigation apparatus 1. In FIG. 8, the navigation apparatus 1B includes an image acquisition unit 10, a data storage processing unit 12B, a data retrieval unit 13B, and a parameter calculation unit 14B. The data storage processing unit 12B stores the image data acquired by the image acquisition unit 10 and the navigation parameters of the mobile object 2 calculated by the parameter calculation unit 14B in a storage device (not shown in FIG. 8). The data retrieval unit 13B retrieves time series of the image data stored in the storage device by the data storage processing unit 12B and outputs the time series to the parameter calculation unit 14B.

The parameter calculation unit 14B calculates navigation parameters corresponding to the time series of the image data from the time series of the image data retrieved by the data retrieval unit 13B by using a neural network. The neural network uses image data as an input and is learned to calculate information in the depth direction of the image data in the intermediate layer, and then calculate the navigation parameters of the mobile object 2. The information in the depth direction of the image data is information corresponding to the depth data.

For example, when this neural network inputs image data Ii and image data Ii-1, distance information in the depth direction of image data Ii is calculated in the intermediate layer, and the navigation parameters of the mobile object 2 are calculated in each layer up to the final layer by using the calculated distance information. Since the neural network generates information corresponding to the depth data in this way, the navigation apparatus 1B can calculate the navigation parameters of the mobile object 2 even if the mobile object 2 does not have the distance sensor 4.

Note that, the neural network used for calculating the navigation parameters may be a neural network having an input layer capable of inputting (n + 1) pieces of image data from the image data Ii to the image data Ii-n. The parameter calculation unit 14B calculates navigation parameters indicating both or one of the amount of change in the location and the amount of change in the posture of the mobile object 2 by using a neural network that calculates both or one of the amount of change in the location and the amount of change in the posture of the mobile object 2 with (n + 1) pieces of image data as inputs.

Next, the hardware configuration that implements the functions of the navigation apparatus 1 will be described.

The functions of the image acquisition unit 10, the depth acquisition unit 11, the data storage processing unit 12, the data retrieval unit 13, and the parameter calculation unit 14 in the navigation apparatus 1 are implemented by a processing circuit.

That is, the navigation apparatus 1 includes a processing circuit for executing the processing from step ST1 to step ST5 shown in FIG. 2. The processing circuit may be dedicated hardware or a central processing unit (CPU) that executes a program stored in a memory.

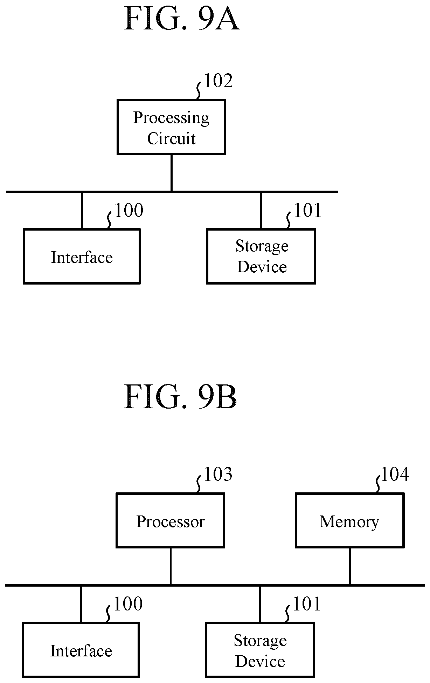

FIG. 9A is a block diagram showing a hardware configuration for implementing the functions of the navigation apparatus 1. FIG. 9B is a block diagram showing a hardware configuration for executing software that implements the functions of the navigation apparatus 1. In FIGS. 9A and 9B, an interface 100 is an interface that relays exchange of information between the navigation apparatus 1, the photographing device 3, and the distance sensor 4. A storage device 101 is a storage device in which image data and depth data are stored by the data storage processing unit 12. The storage device 101 may be, for example, a hard disk included in the navigation apparatus 1 or an external storage device capable of reading information via a communication network.

In a case where the processing circuit is a dedicated hardware processing circuit 102 shown in FIG. 9A, the processing circuit 102 corresponds, for example, to a single circuit, a composite circuit, a programmed processor, a parallel-programmed processor, an application specific integrated circuit (ASIC), a field-programmable gate array (FPGA), or a combination thereof.

The functions of the image acquisition unit 10, the depth acquisition unit 11, the data storage processing unit 12, the data retrieval unit 13, and the parameter calculation unit 14 in the navigation apparatus 1 may be implemented by separate processing circuits, and these functions may be collectively implemented by one processing circuit.

In a case where the processing circuit is a processor 103 shown in FIG. 9B, the functions of the image acquisition unit 10, the depth acquisition unit 11, the data storage processing unit 12, the data retrieval unit 13, and the parameter calculation unit 14 in the navigation apparatus 1 are implemented by software, firmware, or a combination of software and firmware. Note that, software or firmware is written as a program and stored in a memory 104.

The processor 103 reads and executes the program stored in the memory 104, thereby implementing functions of the image acquisition unit 10, the depth acquisition unit 11, the data storage processing unit 12, the data retrieval unit 13, and the parameter calculation unit 14 in the navigation apparatus 1. That is, the navigation apparatus 1 includes a memory 104 for storing programs in which the processing from step ST1 to step ST5 in the flowchart shown in FIG. 2 are executed as a result when executed by the processor 103. These programs cause the computer to execute the procedures or methods performed by the image acquisition unit 10, the depth acquisition unit 11, the data storage processing unit 12, the data retrieval unit 13, and the parameter calculation unit 14 in the navigation apparatus 1. The memory 104 may be a computer-readable storage medium in which programs for causing the computer to function as the image acquisition unit 10, the depth acquisition unit 11, the data storage processing unit 12, the data retrieval unit 13, and the parameter calculation unit 14 in the navigation apparatus 1 are stored.

Examples of the memory 104 correspond to a nonvolatile or volatile semiconductor memory, such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, and a DVD.

Some of the functions of the image acquisition unit 10, the depth acquisition unit 11, the data storage processing unit 12, the data retrieval unit 13, and the parameter calculation unit 14 in the navigation apparatus 1 are implemented by dedicated hardware, and some may be implemented by software or firmware.

For example, the functions of the image acquisition unit 10, the depth acquisition unit 11, and the data storage processing unit 12 are implemented by the processing circuit 102, which is dedicated hardware, and the functions of the data retrieval unit 13 and the parameter calculation unit 14 are implemented by the processor 103 reading and executing the programs stored in the memory 104. Thus, the processing circuit can implement the above functions by hardware, software, firmware, or a combination thereof.

As described above, the navigation apparatus 1 according to the first embodiment calculates navigation parameters of the mobile object 2 corresponding to the data used for the calculation of the navigation parameters of the mobile object 2 by using a neural network that calculates the navigation parameters of the mobile object 2 with the data used for the calculation of the navigation parameters of the mobile object 2 as an input. By using this neural network, it is not necessary to perform image matching based on image features and adjustment calculation of the location and posture of the mobile object for each image data as in the conventional navigation apparatus described in Patent Literature 1, and therefore, even if the time resolution of the navigation parameters of the mobile object 2 is increased, the increase in the calculation resources required for the calculation of the navigation parameters can be suppressed.

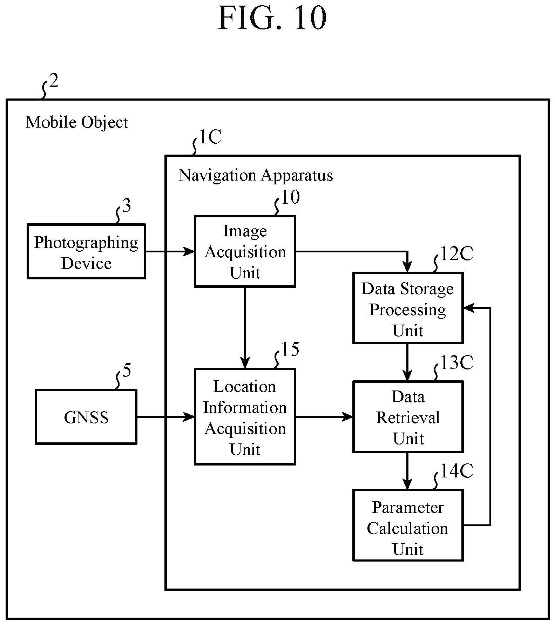

Second embodiment not according to the invention. FIG. 10 is a block diagram showing a configuration example of a navigation apparatus 1C according to a second embodiment. In FIG. 10, the same components as those in FIG. 1 are designated by the same reference numerals, and the description thereof will be omitted. The navigation apparatus 1C is, for example, a navigation apparatus included in the measuring system mounted on the mobile object 2. The measuring system includes a photographing device 3 and a GNSS 5 in addition to the navigation apparatus 1C, and measures topography by using the image data captured by the photographing device 3 and the location information of the mobile object 2 measured by the GNSS 5.

The navigation apparatus 1C estimates the location and posture of the mobile object 2 in motion. Note that, as shown in FIG. 10, the navigation apparatus 1C may be a device mounted on the mobile object 2 or a device provided at a place different from the mobile object 2. The navigation apparatus 1C, in a case where it is an apparatus provided at a place different from that of the mobile object 2, estimates the location and posture of the mobile object 2 using the information received from the mobile object 2 by wired or wireless communication.

The GNSS (Global Navigation Satellite System) 5 analyzes a GNSS signal received from the GNSS satellite and measures the location information indicating the current location of the mobile object 2. The location information of the mobile object 2 measured by the GNSS 5 is information indicating the approximate location of the mobile object 2 including an error based on the reception accuracy of the GNSS signal.

As shown in FIG. 10, the navigation apparatus 1C includes an image acquisition unit 10, a data storage processing unit 12C, a data retrieval unit 13C, a parameter calculation unit 14C, and a location information acquisition unit 15.

The location information acquisition unit 15 is a data acquisition unit that acquires the location information of the mobile object 2 measured by the GNSS 5. The data storage processing unit 12C stores the image data acquired by the image acquisition unit 10, the ground image data, and the ground depth data in advance in a storage device (not shown) in FIG. 10.

The ground image data is image data obtained by photographing a region where the mobile object 2 is moving (flying) from the sky in advance, and is stored in the data storage processing unit 12C in association with the location information of the photographed region. The ground depth data is depth data indicating information (distance) in the depth direction of the ground image data. For example, the ground depth data is associated with the ground image data corresponding thereto and stored in the data storage processing unit 12C.

The data retrieval unit 13C retrieves the image data, the ground image data, and the ground depth data corresponding thereto stored in the data storage processing unit 12C on the basis of the location information of the mobile object 2 acquired by the location information acquisition unit 15. For example, the data retrieval unit 13C, when image data is acquired by the image acquisition unit 10 and stored in the data storage processing unit 12C, retrieves the image data from the data storage processing unit 12C, and retrieves the ground image data and the ground depth data corresponding to the location information of the mobile object 2 when the image data is acquired.

The parameter calculation unit 14C calculates the navigation parameters of the mobile object 2 when the image data is acquired, from the image data, the ground image data, and the ground depth data retrieved by the data retrieval unit 13C by using a neural network. The neural network is learned to calculate the navigation parameters of the mobile object 2 with the image data, ground image data, and ground depth data as inputs. Further, the navigation parameter is a parameter indicating both or one of the location and the posture of the mobile object 2 when the image data is acquired.

The operation will be described next.

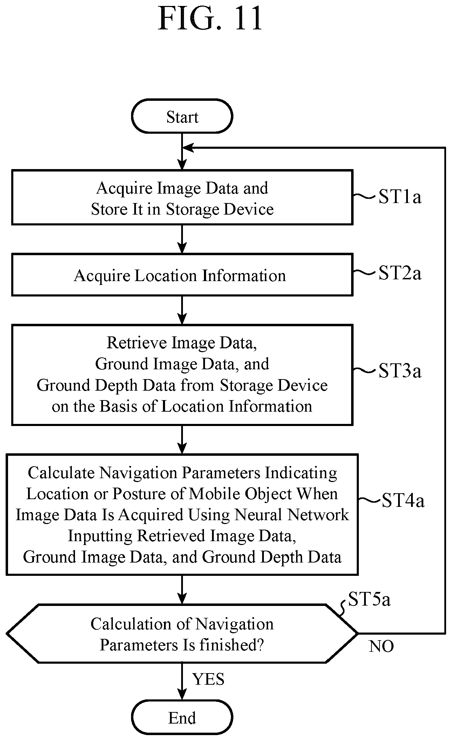

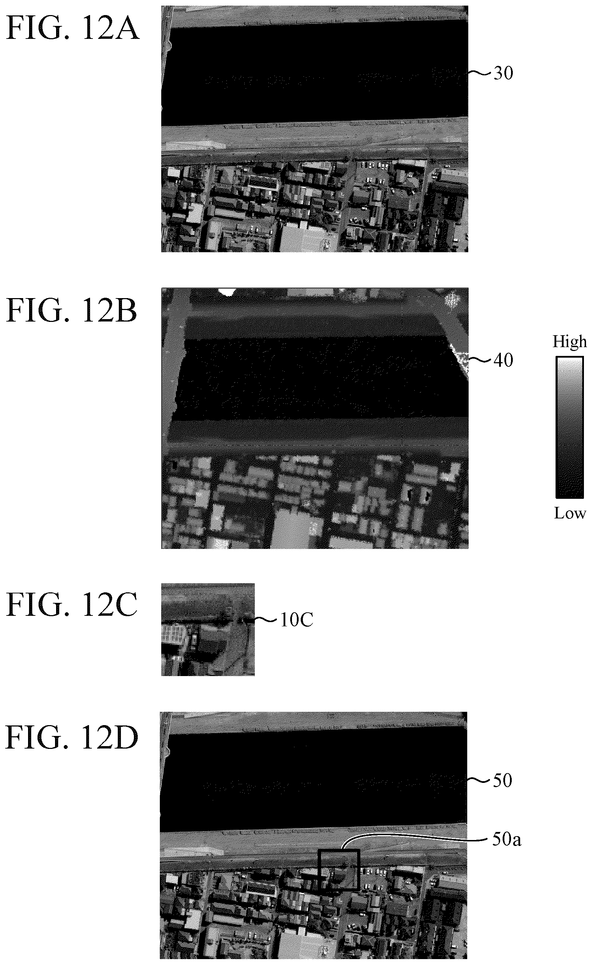

FIG. 11 is a flowchart showing a navigation parameter calculation method according to the second embodiment. In the following description, the mobile object 2 is an aircraft, and the photographing device 3 photographs the area under the mobile object 2. FIG. 12A is an image showing an example of ground image data 30. FIG. 12B is an image showing an example of ground depth data 40. FIG. 12C is an image showing an example of image data 10C. FIG. 12D is an image showing an example of ground image data 50 in which the image data 10C of FIG. 12C is superimposed on the ground image data 30 of FIG. 12A.

The image acquisition unit 10 acquires optical information from the photographing device 3, generates image data indicating an image of the subject from the acquired optical information, and outputs the image data to the data storage processing unit 12C. The data storage processing unit 12C stores the image data input from the image acquisition unit 10 in the storage device (step ST1a). For example, when the image acquisition unit 10 acquires the image data 10C shown in FIG. 12C, the image acquisition unit 10 outputs the acquired image data 10C to the data storage processing unit 12C and notifies the location information acquisition unit 15 that the image data 10C has been acquired. Note that, since, as soon as optical information is photographed by the photographing device 3, the image acquisition unit 10 generates image data corresponding to the optical information, it is assumed that the photographing of the optical information by the photographing device 3 and acquisition of the image data by the image acquisition unit 10 are performed at approximately the same time.

The location information acquisition unit 15 acquires the location information of the mobile object 2 measured by the GNSS 5, and outputs the acquired location information to the data retrieval unit 13C (step ST2a). For example, when the image acquisition unit 10 notifies that the image data 10C has been acquired, the location information acquisition unit 15 acquires the location information of the mobile object 2 when the image data 10C is acquired, from the GNSS 5. The processing of step ST1a and step ST2a corresponds to the acquisition processing of data used for calculation of the navigation parameters of the mobile object 2 by the data acquisition unit (image acquisition unit 10 and location information acquisition unit 15), and processing of storing the data acquired by the data acquisition unit in the storage device by the data storage processing unit 12C.

The data retrieval unit 13C retrieves the image data 10C stored in the storage device by the data storage processing unit 12C, and retrieves the ground image data 30 and the ground depth data 40 corresponding thereto from the storage device on the basis of the location information of the mobile object 2 acquired by the location information acquisition unit 15 (step ST3a). For example, the data retrieval unit 13C retrieves the image data 10C stored in the storage device by the data storage processing unit 12C, and retrieves the ground image data 30, in which the region under the mobile object 2 is photographed when the image data 10C is acquired, and the ground depth data 40 corresponding thereto.

The parameter calculation unit 14C calculates the navigation parameters indicating the location and posture of the mobile object 2 when the image data 10C is acquired, from the image data 10C, the ground image data 30, and the ground depth data 40 retrieved by the data retrieval unit 13C by using a neural network (step ST4a).

For example, the parameter calculation unit 14C inputs the image data 10C, the ground image data 30, and the ground depth data 40 to the input layer of the neural network, and acquires the location of the mobile object 2 (x, y, z) calculated by the neural network and output from the output layer. Note that, the navigation parameter of the mobile object 2 calculated in the processing of step ST4a may be the posture ($\omega$, $\varphi$, $\kappa$) of the mobile object 2, or may be both of the location (x, y, z) and posture ($\omega$, $\varphi$, $\kappa$) of the mobile object 2. The navigation parameters of the mobile object 2 calculated in this way are stored in the data storage processing unit 12C. Further, the posture angle calculated as the navigation parameter of the mobile object 2 may be at least one of $\omega$, $\varphi$, and $\kappa$.

After that, the parameter calculation unit 14C confirms whether or not to finish the calculation of the navigation parameters (step ST5a). For example, when the measuring system finishes the measurement of topography, the calculation of the navigation parameters of the mobile object 2 is also finished. When the calculation of the navigation parameters is finished (step ST5a;

YES), the series of processes shown in FIG. 11 is finished. On the other hand, if the calculation of the navigation parameters is not finished (step ST5a; NO), the process returns to the processing of step ST1a, and the series of processes described above is repeated.

Since the location (x, y, z) of the mobile object 2 is obtained by the processing of step ST4a, it is possible to obtain the location of the image data 10C in the ground image data 30 on the basis of this location. The ground image data 50 shown in FIG. 12D is ground image data that reflects the calculation result of the location of the mobile object 2, and a region 50a in the image shows the location of the mobile object 2 from which the image data 10C has been acquired.

Note that, the neural network used by the parameter calculation unit 14C is learned to use teacher data, which is a set of image data, ground image data, and ground depth data, and both or one of the location and posture of the mobile object 2 corresponding thereto, and calculate and output both or one of the location and posture of the mobile object 2 when the above image data is acquired.

In addition, the neural network may be learned to use teacher data, which is a set of image data, ground image data, ground depth data, and location information of the mobile object 2 and the posture ($\omega$, $\varphi$, $\kappa$) of the mobile object 2 corresponding thereto, and calculate and output the posture ($\omega$, $\varphi$, $\kappa$) of the mobile object 2 when the above image data is acquired. In this case, the parameter calculation unit 14C calculates the posture of the mobile object 2 when the image data is acquired, from the image data, the ground image data, the ground depth data, and the location information of the mobile object 2 by using this neural network. At this time, the posture angle calculated as the navigation parameter of the mobile object 2 may be at least one of $\omega$, $\varphi$, and $\kappa$.

Further, according to a non-claimed example the neural network may be learned to use teacher data, which is a set of the image data, the ground image data, and the location information of the mobile object 2, and the posture ($\omega$, $\varphi$, $\kappa$) of the mobile object 2 corresponding thereto, and calculate and output the posture ($\omega$, $\varphi$, $\kappa$) of the mobile object 2 when the above image data is acquired. In this case, the parameter calculation unit 14C calculates the posture of the mobile object 2 when the image data is acquired, from the image data, the ground image data, and the location information of the mobile object 2 by using this neural network. At this time, the posture angle calculated as the navigation parameter of the mobile object 2 may be at least one of $\omega$, $\varphi$, and $\kappa$.

Further, according to a non-claimed example the neural network may be learned to use teacher data, which is a set of the image data and the ground image data and both or one of the location and posture of the mobile object 2 corresponding thereto, and calculate and output both or one of the location (x, y, z) and posture ($\omega$, $\varphi$, $\kappa$) of the mobile object 2 when the image data is acquired. In this case, the parameter calculation unit 14C calculates both or one of the location and posture of the mobile object 2 when the image data is acquired, from the image data and the ground image data by using this neural network. The posture angle calculated as the navigation parameter of the mobile object 2 may be at least one of $\omega$, $\varphi$, and $\kappa$.

Next, the hardware configuration that implements the functions of the navigation apparatus 1C will be described.

The functions of the image acquisition unit 10, the data storage processing unit 12C, the data retrieval unit 13C, the parameter calculation unit 14C, and the location information acquisition unit 15 in the navigation apparatus 1C are implemented by the processing circuit. That is, the navigation apparatus 1C includes a processing circuit for executing the processing from step ST1a to step ST5a shown in FIG. 11. The processing circuit may be dedicated hardware, or may be a CPU that executes a program stored in the memory.

If the processing circuit is the dedicated hardware processing circuit 102 shown in FIG. 9A, the processing circuit 102 correspond, for example, to a single circuit, a composite circuit, a programmed processor, a parallel programmed processor, an ASIC, an FPGA, or a combination of these.

The functions of the image acquisition unit 10, the data storage processing unit 12C, the data retrieval unit 13C, the parameter calculation unit 14C, and the location information acquisition unit 15 in the navigation apparatus 1C may be implemented by separate processing circuits, or these functions may be collectively implemented by one processing circuit.

When the processing circuit is the processor 103 shown in FIG. 9B, the functions of the image acquisition unit 10, the data storage processing unit 12C, the data retrieval unit 13C, the parameter calculation unit 14C, and the location information acquisition unit 15 in the navigation apparatus 1C are implemented by software, firmware, or a combination of software and firmware. Note that, software or firmware is written as a program and stored in a memory 104.

The processor 103 reads and executes the program stored in the memory 104, and thereby implements the functions of the image acquisition unit 10, the data storage processing unit 12C, the data retrieval unit 13C, the parameter calculation unit 14C, and the location information acquisition unit 15 in the navigation apparatus 1C. That is, the navigation apparatus 1C includes the memory 104 for storing programs by which the processes from step ST1a to step ST5a in the flowchart shown in FIG. 11 are executed as a result when executed by the processor 103. These programs cause the computer to execute the procedures or methods performed by the image acquisition unit 10, the data storage processing unit 12C, the data retrieval unit 13C, the parameter calculation unit 14C, and the location information acquisition unit 15 in the navigation apparatus 1C. The memory 104 is a computer-readable storage medium in which programs for causing the computer to function as the image acquisition unit 10, the data storage processing unit 12C, the data retrieval unit 13C, the parameter calculation unit 14C, and the location information acquisition unit 15 in the navigation apparatus 1 are stored.

Some of the functions of the image acquisition unit 10, the data storage processing unit 12C, the data retrieval unit 13C, the parameter calculation unit 14C, and the location information acquisition unit 15 in the navigation apparatus 1C may be implemented by dedicated hardware, and some may be implemented by software or firmware.

Thus, the processing circuit can implement the above functions by hardware, software, firmware, or a combination thereof.

Next, a modification of the navigation apparatus according to the second embodiment will be described.

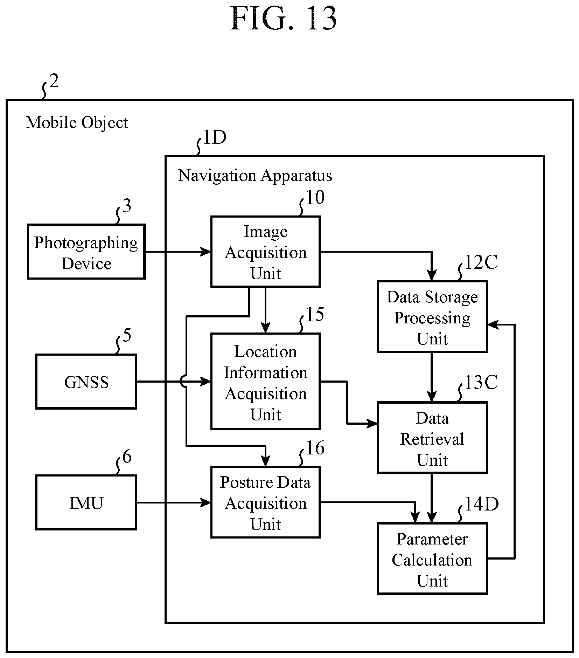

FIG. 13 is a block diagram showing a configuration of a navigation apparatus 1D, which is a modification of the navigation apparatus 1C. In FIG. 13, the same components as those in FIGS. 1 and 11 are designated by the same reference numerals, and the description thereof will be omitted. The mobile object 2 shown in FIG. 13 includes an IMU (Inertial Measurement Unit) 6 in addition to the navigation apparatus 1D, the photographing device 3, and the GNSS 5. The IMU 6 measures the posture data of the mobile object 2. The posture data includes, for example, the posture angle ($\omega$, $\varphi$, $\kappa$) of the mobile object 2.

The navigation apparatus 1D includes an image acquisition unit 10, a data storage processing unit 12C, a data retrieval unit 13C, a parameter calculation unit 14D, a location information acquisition unit 15, and a posture data acquisition unit 16. The posture data acquisition unit 16 acquires the posture data of the mobile object 2 measured by the IMU 6.

The parameter calculation unit 14D calculates the navigation parameters of the mobile object 2 when the image data is acquired, from the image data, the ground image data and the ground depth data retrieved by the data retrieval unit 13C and the posture data of the mobile object 2 acquired by the posture data acquisition unit 16 by using a neural network. The neural network is learned to calculate the navigation parameters of the mobile object 2 with the image data, the ground image data, the ground depth data, and the posture data of the mobile object 2 as inputs. In addition, the navigation parameter is a parameter indicating the location of the mobile object 2 when the image data is acquired.

The image acquisition unit 10 acquires optical information from the photographing device 3, outputs image data generated from the acquired optical information to the data storage processing unit 12C, and also notifies the location information acquisition unit 15 and the posture data acquisition unit 16 that the image data has been acquired. The location information acquisition unit 15, when the acquisition of the image data is notified by the image acquisition unit 10, acquires the location information of the mobile object 2 when the image data is acquired, from the GNSS 5. The posture data acquisition unit 16, when the acquisition of the image data is notified by the image acquisition unit 10, acquires the posture data of the mobile object 2 when the image data is acquired, from the IMU 6.

The data retrieval unit 13C retrieves the image data, the ground image data, and the ground depth data corresponding thereto stored in the data storage processing unit 12C on the basis of the location information of the mobile object 2 acquired by the location information acquisition unit 15.

The parameter calculation unit 14D calculates the navigation parameters indicating the location of the mobile object 2 when the image data is acquired, from the image data, ground image data, and ground depth data retrieved by the data retrieval unit 13C and the posture data acquired by the posture data acquisition unit 16 by using a neural network.

Note that, the neural network used by the parameter calculation unit 14D is learned to use teacher data, which is a set of the image data, ground image data, ground depth data, and posture data measured by the IMU 6, and the location (x, y, z) of the mobile object 2 corresponding thereto, and calculate and output the location of the mobile object 2 when the above image data is acquired.

Further, the neural network may be learned to use teacher data, which is a set of the image data, ground image data, and posture data measured by the IMU 6, and the location of the mobile object 2 corresponding thereto, and calculate and output the location (x, y, z) of the mobile object 2 when the above image data is acquired. In this case, the parameter calculation unit 14D calculates the location of the mobile object 2 when the image data is acquired, from the image data, the ground image data, and the posture data by using this neural network.

As described above, the navigation apparatus 1C according to the second embodiment calculates the navigation parameters of the mobile object 2 when the image data is acquired, by using a neural network that calculates the navigation parameters of the mobile object 2 with the image data, ground image data, and ground depth data as inputs. By using this neural network, it is not necessary to perform image matching based on image features and adjustment calculation of the location and posture of the mobile object for each image data as in the conventional navigation apparatus described in Patent Literature 1, and therefore, even if the time resolution of the navigation parameters of the mobile object 2 is increased, the increase in the calculation resources required for the calculation of the navigation parameters can be suppressed.

Further, the navigation apparatus 1D according to the second embodiment calculates the navigation parameters of the mobile object 2 when the image data is acquired, by using a neural network that calculates the navigation parameters of the mobile object 2 with the image data, ground image data, ground depth data, and posture data measured by the IMU 6 as inputs. By using this neural network, it is possible to suppress an increase in the calculation resources required for calculating the navigation parameters of the mobile object 2 in the same manner as described above.

INDUSTRIAL APPLICABILITY

The navigation apparatus, the navigation parameter calculation method, and the non-transitory computer readable medium according to the present invention include a data acquisition unit for acquiring data used for calculating navigation parameters of a mobile object, a data storage processing unit for storing the data acquired by the data acquisition unit in the storage device, a data retrieval unit for retrieving the data stored in the storage device, and a parameter calculation unit for calculating navigation parameters of the mobile object corresponding to the data retrieved by the data retrieval unit by using a neural network that calculates the navigation parameters of the mobile object with the data used for calculating the navigation parameters of the mobile object as an input, and even if the time resolution of the navigation parameters of the mobile object is increased, the increase in the calculation resources required for the calculation of the navigation parameters can be suppressed, and it is suitable for calculating the navigation parameters of the mobile object.

REFERENCE SIGNS LIST

1, 1A, 1B, 1C, 1D: navigation apparatus, 2: mobile object, 3: photographing device, 4: distance sensor, 10: image acquisition unit, 10A, 10B, 10C: image data, 11, 11A: depth acquisition unit, 12, 12A, 12B, 12C: data storage processing unit, 13, 13A, 13B, 13C: data retrieval unit, 14, 14A, 14B, 14C, 14D: parameter calculation unit, 15: location information acquisition unit, 16: posture data acquisition unit, 20: depth data, 30: ground image data, 40: ground depth data, 50: ground image data, 50a: region, 100: interface, 101: storage device, 102: processing circuit, 103: processor, 104: memory

**Claims**

1. A navigation apparatus (1A-D) comprising:

a data acquisition unit for acquiring data used for calculating navigation parameters of a mobile object (2);
a data storage processing unit (12A-C) for storing the data acquired by the data acquisition unit in a storage device;
a data retrieval unit (13A-C) for retrieving the data stored in the storage device; and

a parameter calculation unit (14A-D) for calculating the navigation parameters of the mobile object (2) corresponding to the data retrieved by the data retrieval unit (13A-C) using a neural network that calculates the navigation parameters of the mobile object (2) with the data used for calculating the navigation parameters of the mobile object (2) as an input,

wherein the data acquisition unit acquires image data indicating an image of a subject photographed by a photographing device (3) mounted on the mobile object (2) and depth data indicating distance information in a depth direction of the image data,

the data storage processing unit (12A-C) stores the image data and the depth data in the storage device,

the data retrieval unit retrieves time series of the image data of the subject and the depth data stored in the storage device, and

the parameter calculation unit (14A-D) calculates the navigation parameters of the mobile object (2) corresponding to the time series of the image data from the time series of the image data and the depth data retrieved by the data retrieval unit (13A-C) by using a neural network that calculates the navigation parameters indicating both of a change amount of a location and a change amount of a posture of the mobile object (2) with the series of image data and the depth data as input.

2. The navigation apparatus according to claim 1, wherein the data acquisition unit generates the depth data by using distance data acquired from a distance sensor (4) mounted on the mobile object (2) and indicating a distance from the distance sensor (4) to a distance measuring point.

3. The navigation apparatus according to claim 1, wherein the data acquisition unit generates the depth data using the image data.

4. A navigation parameter calculation method comprising:

acquiring, by a data acquisition unit, data used for calculating navigation parameters of a mobile object (2);

storing, by a data storage processing unit (12A-C), the data acquired by the data acquisition unit in a storage device;

retrieving, by a data retrieval unit (13A-C), the data stored in the storage device; and

calculating, by a parameter calculation unit (14A-D), the navigation parameters of the mobile object (2) corresponding to the data retrieved by the data retrieval unit (13A-C) by using a neural network that calculates the navigation parameters of the mobile object (2) with the data used for calculating the navigation parameters of the mobile object (2) as an input, wherein

the data acquisition unit acquires image data indicating an image of a subject photographed by a photographing device (3) mounted on the mobile object (2) and depth data indicating distance information in a depth direction of the image data,

the data storage processing unit (12A-C) stores the image data and the depth data in the storage device,

the data retrieval unit (13A-C) retrieves time series of the image data of the subject and the depth data stored in the storage device, and

the parameter calculation unit (14A-D) calculates the navigation parameters of the mobile object (2) corresponding to the time series of the image data from the time series of the image data and the depth data retrieved by the data retrieval unit (13A-C) by using a neural network that calculates the navigation parameters indicating both of a change amount of a location and a change amount of a posture of the mobile object (2) with the series of image data and the depth data as input.

5. A program for causing a computer to function as:

a data acquisition unit for acquiring data used for calculating navigation parameters of a mobile object (2);

a data storage processing unit (12A-C) for storing the data acquired by the data acquisition unit in a storage device;

a data retrieval unit (13A-C) for retrieving the data stored in the storage device; and

a parameter calculation unit (14A-D) for calculating the navigation parameters of the mobile object (2) corresponding to the data retrieved by the data retrieval unit (13A-C) by using a neural network that calculates the navigation parameters of the mobile object (2) with the data used for calculating the navigation parameters of the mobile object (2) as an input,

wherein the data acquisition unit acquires image data indicating an image of a subject photographed by a photographing device (3) mounted on the mobile object (2) and depth data indicating distance information in a depth direction of the image data,

the data storage processing unit (12A-C) stores the image data and the depth data in the storage device,

the data retrieval unit (13A-C) retrieves time series of the image data of the subject and the depth data stored in the storage device, and

the parameter calculation unit (14A-D) calculates the navigation parameters of the mobile object (2) corresponding to the time series of the image data from the time series of the image data and the depth data retrieved by the data retrieval unit (13A-C) by using a neural network that calculates the navigation parameters indicating both of a change amount of a location and a change amount of a posture of the mobile object (2) with the series of image data and the depth data as input.

**Patentansprüche**

1. Navigationsvorrichtung (1A-D), umfassend:

eine Datenerwerbungseinheit zum Erwerben von Daten, die zum Berechnen von Navigationsparametern eines mobilen Objekts (2) genutzt werden;
eine Datenspeicher-Verarbeitungseinheit (12A-C) zum Speichern der von der Datenerwerbungseinheit erworbenen Daten in einer Speichereinrichtung;
eine Datenabrufeinheit (13A-C) zum Abrufen der in der Speichereinrichtung gespeicherten Daten; und
eine Parameter-Berechnungseinheit (14A-D) zum Berechnen der Navigationsparameter des mobilen Objekts (2) entsprechend den von der Datenabrufeinheit (13A-C) abgerufenen Daten unter Verwendung eines neuronalen Netzes, das die Navigationsparameter des mobilen Objekts (2) mit den zum Berechnen der Navigationsparameter des mobilen Objekts (2) genutzten Daten als eine Eingabe berechnet, wobei die Datenerwerbungseinheit Bilddaten, die ein Bild eines Subjekts anzeigen, das von einer an dem mobilen Objekt (2) angebrachten Fotografiereinrichtung (3) fotografiert wurde, und Tiefendaten, die Abstandsinformationen in einer Tiefenrichtung der Bilddaten anzeigen, erwirbt,
die Datenspeicher-Verarbeitungseinheit (12A-C) die Bilddaten und die Tiefendaten in der Speichereinrichtung speichert,
die Datenabrufeinheit Zeitreihen der Bilddaten des Subjekts und der Tiefendaten, welche in der Speichereinrichtung gespeichert sind, abruft, und
die Parameter-Berechnungseinheit (14A-D) die Navigationsparameter des mobilen Objekts (2) entsprechend den Zeitreihen der Bilddaten aus den Zeitreihen der Bilddaten und der Tiefendaten, die von der Datenabrufeinheit (13A-C) abgerufen wurden, berechnet, indem ein neuronales Netz genutzt wird, das die Navigationsparameter mit der Reihe von Bilddaten und den Tiefendaten als Eingabe berechnet, wobei die Navigationsparameter sowohl einen Änderungsbetrag eines Ortes als auch einen Änderungsbetrag einer Lage des mobilen Objekts (2) angeben.

2. Navigationsvorrichtung nach Anspruch 1, wobei die Datenerwerbungseinheit die Tiefendaten unter Verwendung von Entfernungsdaten erzeugt, die von einem an dem mobilen Objekt (2) angebrachten Entfernungssensor (4) erworben werden und eine Entfernung von dem Entfernungssensor (4) zu einem Entfernungsmesspunkt angeben.

3. Navigationsvorrichtung nach Anspruch 1, wobei die Datenerwerbungseinheit die Tiefendaten unter Verwendung der Bilddaten erzeugt.

4. Navigationsparameter-Berechnungsverfahren, umfassend:

Erwerben, durch eine Datenerwerbungseinheit, von Daten, welche zum Berechnen von Navigationsparametern eines mobilen Objekts (2) genutzt werden;
Speichern, durch eine Datenspeicher-Verarbeitungseinheit (12A-C), der Daten, die von der Datenerwerbungseinheit erworben werden, in einer Speichereinrichtung;
Abrufen, durch eine Datenabrufeinheit (13A-C), der in der Speichereinrichtung gespeicherten Daten; und
Berechnen, durch eine Parameterberechnungseinheit (14A-D), der Navigationsparameter des mobilen Objekts (2) entsprechend den von der Datenabrufeinheit (13A-C) abgerufenen Daten unter Verwendung eines neuronalen Netzes, das die Navigationsparameter des mobilen Objekts (2) mit den zum Berechnen der Navigationsparameter des mobilen Objekts (2) genutzten Daten als eine Eingabe berechnet, wobei die Datenerwerbungseinheit Bilddaten, die ein Bild eines Subjekts anzeigen, das von einer an dem mobilen Objekt (2) angebrachten Fotografiereinrichtung (3) fotografiert wurde, und Tiefendaten, die Abstandsinformationen in einer Tiefenrichtung der Bilddaten anzeigen, erwirbt, die Datenspeicher-Verarbeitungseinheit (12A-C) die Bilddaten und die Tiefendaten in der Speichereinrichtung speichert, die Datenabrufeinheit (13A-C) Zeitreihen der Bilddaten des Subjekts und die Tiefendaten, welche in der Speichereinrichtung gespeichert sind, abruft, und die Parameter-Berechnungseinheit (14A-D) die Navigationsparameter des mobilen Objekts (2) entsprechend den Zeitreihen der Bilddaten aus den Zeitreihen der Bilddaten und der Tiefendaten berechnet, die von der Datenabrufeinheit (13A-C) abgerufen wurden, indem ein neuronales Netz genutzt wird, das die Navigationsparameter mit den Bilddaten und den Tiefendaten als Eingabe berechnet, wobei die Navigationsparameter sowohl einen Änderungsbetrag eines Ortes als auch einen Änderungsbetrag einer Lage des mobilen Objekts (2) angeben.

**5.** Programm, das einen Computer veranlasst, zu funktionieren als:

eine Datenerwerbungseinheit zum Erwerben von Daten, die zum Berechnen von Navigationsparametern eines mobilen Objekts (2) genutzt werden;
eine Datenspeicher-Verarbeitungseinheit (12A-C) zum Speichern der von der Datenerwerbungseinheit erworbenen Daten in einer Speichereinrichtung;
eine Datenabrufeinheit (13A-C) zum Abrufen der in der Speichereinrichtung gespeicherten Daten; und
eine Parameter-Berechnungseinheit (14A-D) zum Berechnen der Navigationsparameter des mobilen Objekts (2) entsprechend den von der Datenabrufeinheit (13A-C) abgerufenen Daten unter Verwendung eines neuronalen Netzes, das die Navigationsparameter des mobilen Objekts (2) mit den zum Berechnen der Navigationsparameter des mobilen Objekts (2) genutzten Daten als eine Eingabe berechnet,
wobei die Datenerwerbungseinheit Bilddaten, die ein Bild eines Subjekts anzeigen, das von einer an dem mobilen Objekt (2) angebrachten Fotografiereinrichtung (3) fotografiert wurde, und Tiefendaten, die Abstandsinformationen in einer Tiefenrichtung der Bilddaten anzeigen, erwirbt,
die Datenspeicher-Verarbeitungseinheit (12A-C) die Bilddaten und die Tiefendaten in der Speichereinrichtung speichert,
die Datenabrufeinheit (13A-C) Zeitreihen der Bilddaten des Subjekts und die Tiefendaten, welche in der Speichereinrichtung gespeichert sind, abruft, und
die Parameter-Berechnungseinheit (14A-D) die Navigationsparameter des mobilen Objekts (2) entsprechend den Zeitreihen der Bilddaten aus den Zeitreihen der Bilddaten und der Tiefendaten, die von der Datenabrufeinheit (13A-C) abgerufen wurden, berechnet, indem ein neuronales Netz genutzt wird, das die Navigationsparameter mit den Bilddaten und den Tiefendaten als Eingabe berechnet, wobei die Navigationsparameter sowohl einen Änderungsbetrag eines Ortes als auch einen Änderungsbetrag einer Lage des mobilen Objekts (2) angeben.

## Revendications

**1.** Appareil de navigation (1A-D) comprenant :

une unité d'acquisition de données destinée à acquérir des données utilisées pour calculer des paramètres de navigation d'un objet mobile (2) ;
une unité de traitement de stockage de données (12A-C) destinée à stocker les données acquises par l'unité d'acquisition de données dans un dispositif de stockage ;
une unité de récupération de données (13A-C) destinée à récupérer les données stockées dans le dispositif de stockage ; et
une unité de calcul de paramètres (14A-D) destinée à calculer les paramètres de navigation de l'objet mobile (2) correspondant aux données récupérées par l'unité de récupération de données (13A-C) à l'aide d'un réseau de neurones qui calcule les paramètres de navigation de l'objet mobile (2) avec les données utilisées pour calculer les paramètres de navigation de l'objet mobile (2) en tant qu'entrée ;
dans laquelle l'unité d'acquisition de données acquiert des données d'image indiquant une image d'un sujet photographié par un dispositif de photographie (3) monté sur l'objet mobile (2), et des données de profondeur indiquant des informations de distance dans une direction de profondeur des données d'image ;
dans laquelle l'unité de traitement de stockage de données (12A-C) stocke les données d'image et les données de profondeur dans le dispositif de stockage ;
dans laquelle l'unité de récupération de données récupère des séries temporelles des données d'image du sujet et des données de profondeur stockées dans le dispositif de stockage ; et
dans laquelle l'unité de calcul de paramètres (14A-D) calcule les paramètres de navigation de l'objet mobile (2) correspondant aux séries temporelles des données d'image à partir des séries temporelles des données d'image et des données de profondeur récupérées par l'unité de récupération de données (13A-C), en utilisant un réseau de neurones qui calcule les paramètres de navigation indiquant à la fois une quantité de changement d'un emplacement et une quantité de changement d'une posture de l'objet mobile (2) avec les séries de données d'image et les données de profondeur en tant qu'entrée.

**2.** Appareil de navigation selon la revendication 1, dans lequel l'unité d'acquisition de données génère les données de profondeur en utilisant des données de distance acquises à partir d'un capteur de distance (4) monté sur l'objet mobile (2) et indiquant une distance entre le capteur de distance (4) et un point de mesure de distance.

3. Appareil de navigation selon la revendication 1, dans lequel l'unité d'acquisition de données génère les données de profondeur en utilisant les données d'image.

4. Procédé de calcul de paramètres de navigation comprenant les étapes ci-dessous consistant à :

acquérir, par le biais d'une unité d'acquisition de données, des données utilisées pour calculer des paramètres de navigation d'un objet mobile (2) ;

stocker, par le biais d'une unité de traitement de stockage de données (12A-C), les données acquises par l'unité d'acquisition de données, dans un dispositif de stockage ;

récupérer, par le biais d'une unité de récupération de données (13A-C), les données stockées dans le dispositif de stockage ; et

calculer, par le biais d'une unité de calcul de paramètres (14AD), les paramètres de navigation de l'objet mobile (2) correspondant aux données récupérées par l'unité de récupération de données (13A-C), en utilisant un réseau de neurones qui calcule les paramètres de navigation de l'objet mobile (2) avec les données utilisées pour calculer les paramètres de navigation de l'objet mobile (2) en tant qu'entrée, dans laquelle l'unité d'acquisition de données acquiert des données d'image indiquant une image d'un sujet photographié par un dispositif de photographie (3) monté sur l'objet mobile (2), et des données de profondeur indiquant des informations de distance dans une direction de profondeur des données d'image ;

dans laquelle l'unité de traitement de stockage de données (12A-C) stocke les données d'image et les données de profondeur dans le dispositif de stockage ;

l'unité de récupération de données (13A-C) récupère des séries temporelles des données d'image du sujet et des données de profondeur stockées dans le dispositif de stockage ; et

l'unité de calcul de paramètres (14A-D) calcule les paramètres de navigation de l'objet mobile (2) correspondant aux séries temporelles des données d'image à partir des séries temporelles des données d'image et des données de profondeur récupérées par l'unité de récupération de données (13A-C), en utilisant un réseau de neurones qui calcule les paramètres de navigation indiquant à la fois une quantité de changement d'un emplacement et une quantité de changement d'une posture de l'objet mobile (2) avec les séries de données d'image et les données de profondeur en tant qu'entrée.

5. Programme destiné à amener un ordinateur à fonctionner en tant que :

une unité d'acquisition de données destinée à acquérir des données utilisées pour calculer des paramètres de navigation d'un objet mobile (2) ;

une unité de traitement de stockage de données (12A-C) destinée à stocker les données acquises par l'unité d'acquisition de données dans un dispositif de stockage ;

une unité de récupération de données (13A-C) destinée à récupérer les données stockées dans le dispositif de stockage ; et

une unité de calcul de paramètres (14A-D) destinée à calculer les paramètres de navigation de l'objet mobile (2) correspondant aux données récupérées par l'unité de récupération de données (13A-C) à l'aide d'un réseau de neurones qui calcule les paramètres de navigation de l'objet mobile (2) avec les données utilisées pour calculer les paramètres de navigation de l'objet mobile (2) en tant qu'entrée ;

dans laquelle l'unité d'acquisition de données acquiert des données d'image indiquant une image d'un sujet photographié par un dispositif de photographie (3) monté sur l'objet mobile (2), et des données de profondeur indiquant des informations de distance dans une direction de profondeur des données d'image ;

dans laquelle l'unité de traitement de stockage de données (12A-C) stocke les données d'image et les données de profondeur dans le dispositif de stockage ;

dans laquelle l'unité de récupération de données (13A-C) récupère des séries temporelles des données d'image du sujet et des données de profondeur stockées dans le dispositif de stockage ; et

dans laquelle l'unité de calcul de paramètres (14A-D) calcule les paramètres de navigation de l'objet mobile (2) correspondant aux séries temporelles des données d'image à partir des séries temporelles des données d'image et des données de profondeur récupérées par l'unité de récupération de données (13A-C), en utilisant un réseau de neurones qui calcule les paramètres de navigation indiquant à la fois une quantité de changement d'un emplacement et une quantité de changement d'une posture de l'objet mobile (2) avec les séries de données d'image et les données de profondeur en tant qu'entrée.

# FIG. 1

2

Mobile Object

1

Navigation Apparatus

3

Photographing Device

10

Image Acquisition Unit

4

Distance Sensor

11

Depth Acquisition Unit

12

Data Storage Processing Unit

13

Data Retrieval Unit

14

Parameter Calculation Unit

# FIG. 2

```
              ┌─────────┐
              │  Start  │
              └─────────┘
                   │
                   ▼
    ┌───────────────────────────┐
    │   Acquire Image Data and  │ ～ST1
    │  Store It in Storage Device│
    └───────────────────────────┘
                   │
                   ▼
    ┌───────────────────────────┐
    │   Acquire Depth Data and  │ ～ST2
    │  Store It in Storage Device│
    └───────────────────────────┘
                   │
                   ▼
    ┌───────────────────────────┐
    │    Retrieve Image Data Ii,│
    │     Image Data Ii-1, and  │ ～ST3
    │        Depth Data D       │
    │      from Storage Device  │
    └───────────────────────────┘
                   │
                   ▼
    ┌───────────────────────────┐
    │  Calculate Navigation     │
    │  Parameters               │
    │  Indicating Each Amount of│
    │  Change in Location and   │ ～ST4
    │  Posture of Mobile Object │
    │  Using Neural Network     │
    │  Inputting Retrieved      │
    │  Image Data and Depth Data│
    └───────────────────────────┘
                   │
                   ▼         ST5
    ┌───────────────────────────┐
    │  Calculation of Navigation│
    │  Parameters Is finished?  │ NO
    └───────────────────────────┘
                   │ YES
                   ▼
              ┌─────────┐
              │   End   │
              └─────────┘
```

# FIG. 3

~10A

# FIG. 4

~10B

FIG. 5

FIG. 6

# FIG. 7

# FIG. 8

# FIG. 9A

```
        ┌─ 102
   ┌──────────┐
   │Processing│
   │ Circuit  │
   └────┬─────┘
        │
────────┴────────────────────
   │                  │
 ┌─ 100            ┌─ 101
┌──────────┐    ┌──────────┐
│          │    │ Storage  │
│Interface │    │  Device  │
└──────────┘    └──────────┘
```

# FIG. 9B

```
        ┌─ 103                  ┌─ 104
   ┌──────────┐            ┌──────────┐
   │Processor │            │  Memory  │
   └────┬─────┘            └────┬─────┘
        │                       │
────────┴───────────────────────────────
   │                  │
 ┌─ 100            ┌─ 101
┌──────────┐    ┌──────────┐
│          │    │ Storage  │
│Interface │    │  Device  │
└──────────┘    └──────────┘
```

# FIG. 10

Mobile Object *2*

Navigation Apparatus *1C*

Photographing Device *3*

Image Acquisition Unit *10*

Data Storage Processing Unit *12C*

GNSS *5*

Location Information Acquisition Unit *15*

Data Retrieval Unit *13C*

Parameter Calculation Unit *14C*

# FIG. 11

```
                    ┌─────────────┐
                    │    Start    │
                    └──────┬──────┘
                           │
                           ▼
        ┌──────────────────────────────────┐
        │     Acquire Image Data and       │ ～ST1a
        │     Store It in Storage Device   │
        └──────────────────┬───────────────┘
                           │
                           ▼
        ┌──────────────────────────────────┐
        │     Acquire Location Information  │ ～ST2a
        └──────────────────┬───────────────┘
                           │
                           ▼
        ┌──────────────────────────────────┐
        │        Retrieve Image Data,      │
        │        Ground Image Data, and    │ ～ST3a
        │  Ground Depth Data from Storage Device │
        │    on the Basis of Location Information │
        └──────────────────┬───────────────┘
                           │
                           ▼
        ┌──────────────────────────────────┐
        │ Calculate Navigation Parameters Indicating │
        │ Location or Posture of Mobile Object When  │ ～ST4a
        │ Image Data Is Acquired Using Neural Network│
        │      Inputting Retrieved Image Data,       │
        │ Ground Image Data, and Ground Depth Data   │
        └──────────────────┬───────────────┘
                           │
                           ▼                    ST5a
        ╱─────────────────────────────────────╲
       ╱    Calculation of Navigation           ╲    NO
       ╲    Parameters Is finished?             ╱─────►
        ╲─────────────────────────────────────╱
                           │ YES
                           ▼
                    ┌─────────────┐
                    │     End     │
                    └─────────────┘
```

FIG. 12A

~30

FIG. 12B

~40

High

Low

FIG. 12C

~10C

FIG. 12D

~50

~50a

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6029794 B

**Non-patent literature cited in the description**

- **R LI ; Q LIU ; J GUI ; D GU ; H HU.** Indoor relocalization in challenging environments with dual-stream convolutional neural networks. *IEEE Transactions on Automation Science and Engineering,* 01 April 2018, vol. 15 (2), 651-662
- Bioinspired vision-only UAV attitude rate estimation using machine learning. **MERIDA-FLORIANO M et al.** 2017 INTERNATIONAL CONFERENCE ON UNMANNED AIRCRAFT SYSTEMS (ICUAS). IEEE, 13 June 2017, 1476-1482

- **ALEX KRIZHEVSKY ; ILYA SUTSKEVER ; GEOFFREY E HINTON.** Imagenet classification with deep convolutional neural networks. *Advances in neural information processing systems,* 2012, 1097-1105